# EUROPEAN PATENT APPLICATION

(11) **EP 3 816 678 A1**
(43) Date of publication of application: **05.05.2021**
(21) Application number: 19275107.1
(22) Date of filing: 28.10.2019
(51) Int. Cl.: G02B 3/00, G03B 21/625, G02B 27/09, G03B 21/20, G02B 27/01

(54) **DIFFUSER SCREENS FOR HEAD-UP DISPLAYS**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A diffuser screen for head-up displays is described. The diffuser screen comprises a tessellated array of lenslets and this array comprises a plurality of individual lenslets in proximity with N nearest neighbours. For a predetermined lenslet in the array, at least one of the N nearest neighbours has a different optical characteristic to the predetermined lenslet.

## Description

### Background

A head-up display (HUD) is a transparent display device that presents data and or images to a user without requiring the user to look away from the scene they are viewing. For example, a HUD may be used by an aircraft pilot to receive images and data from various sources whilst viewing their normal field of view, either naturally or via an imaging device.

The embodiments described below are provided by way of example only and are not limited to implementations which solve any or all of the disadvantages of known head-up displays.

### Summary

This Summary is provided to introduce a selection of concepts in simplified form that are further described below in the Detailed Description. The Summary is not intended to identify key features or essential features of the claimed subject matter, nor is it intended to be used to limit the scope of the claimed subject matter.

A first aspect provides a diffuser screen for a HUD, the diffuser screen comprising a tessellated array of lenslets and wherein the array comprises a plurality of individual lenslets in proximity with N nearest neighbours; wherein for a predetermined lenslet at least one of the N nearest neighbours has a different optical characteristic to the predetermined lenslet.

The different optical characteristic may result in a different output cone of the lenslet.

The tessellated array of lenslets may comprise a plurality of identical groups of lenslets tessellated over the array, each group of lenslets comprising a plurality of adjacent lenslets and within each group of lenslets, at least one of the lenslets has a different optical characteristic to another lenslet in the group.

Each group may comprise four lenslets and each lenslet in the group has a different optical characteristic to each other lenslet in the group.

Each lenslet may have an identical radius of curvature.

The different optical characteristic may be an offset of a centre of curvature of the lenslet from the centre of the lenslet. Each lenslet may have an offset of an identical magnitude and the different optical characteristic may be the direction of the offset from the centre of the lenslet.

Each lenslet in the array of lenslets may have a different optical characteristic to each other lenslet in the array.

The predetermined lenslet may be a positive lenslet and at least one of the N nearest neighbours may be a negative lenslet.

Each lenslet may be an asymmetric lenslet.

Each lenslet may be hexagonal in shape.

Each lenslet may be spherical in shape.

Each lenslet may be aspherical in shape.

Each lenslet may be freeform in shape.

An output cone of the diffuser screen may be off-axis.

A second aspect provides a HUD comprising the diffuser screen of the first aspect optionally combined with any combination of one or more of the other features described above.

A third aspect provides a method of manufacturing a diffuser screen for a HUD, the method comprising: forming a tesellated array of lenslets comprising a plurality of individual lenslets in proximity with N nearest neighbours; wherein for a predetermined lenslet at least one of the N nearest neighbours has a different optical characteristic to the predetermined lenslet.

Forming a tesellated array of lenslets may comprise: patterning a substrate using lithography to define the tesellated array of lenslets comprising a plurality of individual lenslets in proximity with N nearest neighbours; wherein for a predetermined lenslet at least one of the N nearest neighbours has a different optical characteristic to the predetermined lenslet; and etching the patterned substrate.

### Brief Description of the Drawings

Figure 1 shows a schematic diagram of an example HUD;
Figure 2 shows a schematic diagram of an example diffuser screen for a HUD;
Figure 3 is a schematic diagram of a symmetrical lenslet;
Figures 4 and 5 are schematic diagrams of asymmetrical lenslets;
Figure 6 is a schematic diagram of a first example of an improved diffuser screen for a HUD;
Figure 7 is a schematic diagram of a second example of an improved diffuser screen for a HUD; and
Figure 8 is a schematic diagram showing the effect of the dither on the far field of each lenslet.

### Detailed Description

The following description is presented by way of example to enable a person skilled in the art to make and use the invention. The present invention is not limited to the embodiments described herein and various modifications to the disclosed embodiments will be apparent to those skilled in the art.

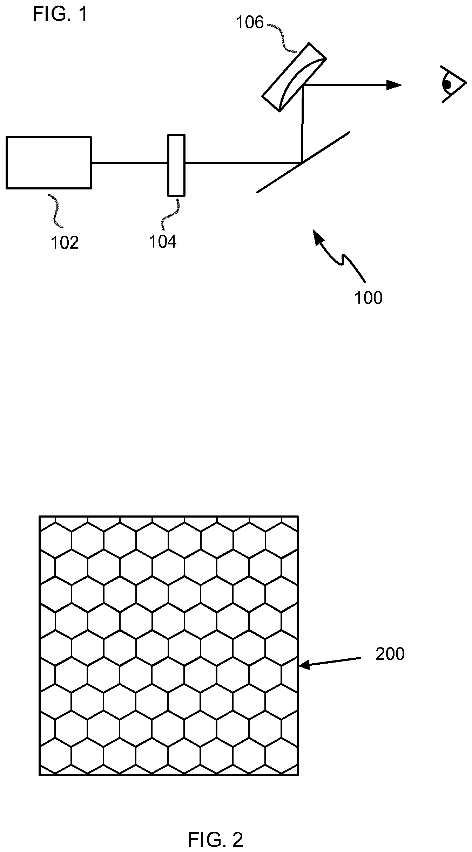

Figure 1 shows an example HUD 100 which comprises a digital light source (or projector) 102, a diffuser screen 104 and collimating optics 106. It will be appreciated that a HUD may comprise additional elements not shown in figure 1.

The digital light source 102 may be of any suitable type and may emit light of any suitable wavelength. Light emitted by the digital light source 102, which is focussed on the diffuser screen 104, passes through the diffuser screen 104 and the collimating optics 106 and is incident on a viewer's eyes if the eyes are positioned appropriately. Light that is emitted by the digital light source 102 but which is not incident on the collimating optics 106 (e.g. because of the angle of the rays, as described below) does not reach the viewer.

The collimating optics 106, which may comprise any suitable arrangement of lenses, mirrors or other optical elements, produces a cylinder of parallel light such that the display can be viewed when the viewer's eyes are within that cylinder. This three-dimensional area in which the viewer's eyes need to be located in order to view the display is referred to as the 'eyebox' of the HUD. Dependent upon the collimating optics 106, the shape and size of eyebox may differ.

The diffuser screen 104 is an optical element that is designed increase the cone angle of the light incident on the screen such that the output light fully illuminates the eyebox; however, if the cone angle is too large, or is otherwise offset from the collimating optics 108 (and hence the eyebox), light that is output from the digital light source 102 is wasted because it does not pass through the HUD optics and if the cone angle is too small then although light is not wasted, filling the eyebox is not maximised. In various examples, the amount of light that fills the eyebox (and hence optical efficiency of the HUD) can be increased by using a diffuser screen that produces an asymmetric cone angle, i.e. a cone angle that is not symmetric about the diffusion screen's normal. By improving the optical efficiency of the HUD, the resultant image is brighter and/or the power consumption of the HUD may be reduced.

In various examples, the diffuser screen 104 may comprise an array of identical lenslets and as shown in figure 2, the lenslets 200 may, for example, be hexagonal in shape as this shape tessellates fully (unlike circular lenslets) and is efficient in terms of both manufacturing and optical performance considerations (e.g. because they generate a hexagonal far-field pattern that is close to circular and because each lenslet is close to circular in shape this reduces the need for abrupt changes in curvature across the surface of the diffiusion screen which are difficult to manufacture accurately). Each individual lenslet may be a positive (i.e. convex) powered lens or a negative (i.e. concave) powered lens and one face of the diffusion screen 104 (e.g. the face one which light from the digital light source 102 is incident) may be flat, such that the lenslets are plano-convex or plano-concave.

The size of the individual lenslets 200 in the array of lenslets that form the diffuser screen 104 may be selected to maintain a required optical resolution, i.e. since each lenslet inverts the image, each lenslet must be smaller than a pixel in width. In an example, each lenslet may have an approximately 25µm diameter and/or there may be 4-5 lenslets per pixel. By reducing the lenslet size (e.g. diameter), the resolution may be increased but this increases the complexity of the manufacturing process and may, ultimately, be limited by a lithographic process that is used to define the individual lenslets.

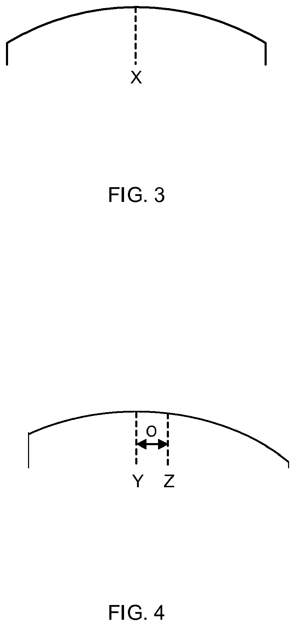

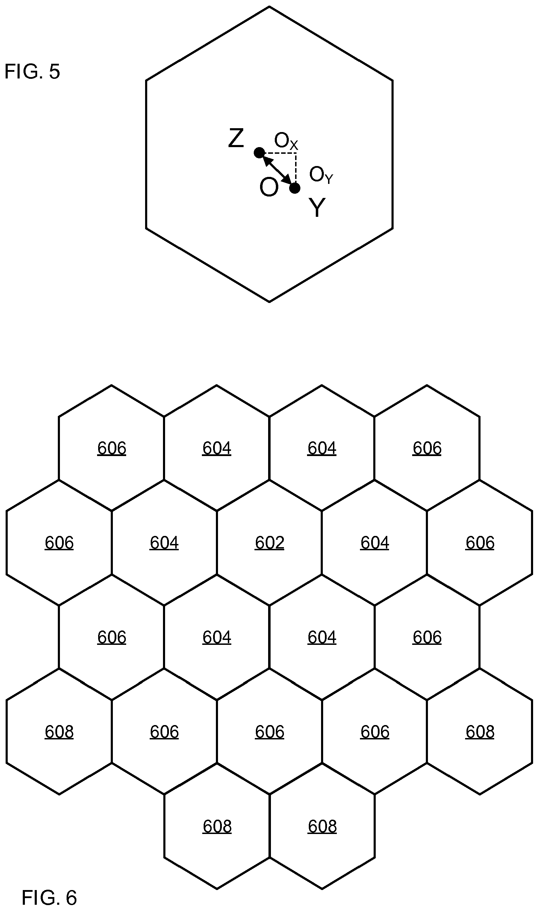

Use of a diffuser screen 104 that comprises an array of lenslets is particularly suited to HUDs that require an asymmetric cone angle to efficiently illuminate the eyebox, because the lens shape of each lens can be tailored to provide the cone angle; however, arrays of lenslets may also be used to provide a symmetric cone angle. To generate an asymmetric cone angle, each of the lenslets is itself asymmetric. In a symmetric lenslet, the centre of curvature of the lenslet coincides with the centre of the lenslet as shown in figure 3 (where the centre is labelled X), In contrast, in an asymmetric lenslet, as shown in figure 4, the centre of curvature of the lenslet (labelled Y) is offset from the (physical) centre of the lenslet (labelled Z). The resultant lenslets may be referred to as 'decentred' lenslets. The amount of offset, o, between the centre of the lenslet and the centre of curvature is indicated by a double-ended arrow in figure 4. It will be appreciated that figures 3 and 4 show cross-sections through example lenslets and for asymmetric lenslets, the offset may be in two dimensions, as shown in figure 5.

As described above, each lenslet 200 in the array of lenslets that forms the diffuser screen 104 may be identical; however, the resultant far field pattern comprises a series of fringes of higher optical intensity spaced by areas of lower optical intensity and this results in unwanted (and distracting) optical effects for the viewer. In particular, as the viewer's eyes move laterally within the eyebox, parts of the projected image change in intensity and so parts of the projected image may become more visible and other parts may become less visible.

Described herein is an improved diffuser screen for a HUD that reduces or eliminates the fringes in the resultant far field pattern and hence reduces or eliminates the unwanted optical effects described above.

As described above the diffuser screen comprises an array of tessellated lenslets. In various examples, the lenslets may be hexagonal in shape. The improved diffuser screen shares many aspects with the diffuser screen described above; however, unlike the diffuser screen described above, not all of the lenslets are identical. In the improved diffuser screen, as shown in figure 6, a given lenslet 602 in the array of lenslets is in proximity with a plurality of lenslets in which at least one or more of the surrounding lenslets are different from the given lenslet. The surrounding lenslets may comprise only the immediate neighbours 604 to the given lenslet 602, such that at least one of the immediate neighbour lenslets 604 is different to the given lenslet 602. In other examples, the surrounding lenslets may comprise both the immediate neighbour lenslets 604 and the second neighbours 606, such that at least one of the immediate neighbour lenslets 604 and second neighbour lenslets 606 is different to the given lenslet 602. In yet further examples, the surrounding lenslets may additionally comprise the third neighbour lenslets 608 and optionally more distant neighbours (e.g. fourth neighbours, etc.). As shown in the example in figure 6, if the given lenslet 602 is hexagonal in shape, there are six immediate neighbour lenslets 604 and twelve second neighbour lenslets 606.

In various examples, any reference to a difference between lenslets in the array of lenslets refers to an optical difference and this optical difference (i.e. difference in optical properties) may be a consequence of a physical difference. For example, whilst the radius of curvature of all the lenslets in the array may be the same, the centre of curvature of one or more of the surrounding lenslets may be offset from the centre of the lenslet by a different distance and/or in a different direction compared to the given lenslet. In various examples, all the lenslets in the array of lenslets may be asymmetrical (e.g. such that in all cases o≠0) or one or more of the lenslets may be symmetrical (e.g. with o=0) and other lenslets may be asymmetrical (e.g. with o>0).

As a consequence of the variance in lenslets within the array, the far-field pattern is dithered on a sub-pixel level (e.g. the far-field patterns for different lenslets do not align exactly but are offset slightly from each other) and the series of fringes of higher optical intensity spaced by areas of lower optical intensity are eliminated or the contrast between fringes of higher optical intensity and areas of lower optical intensity is reduced. This eliminates or reduces the unwanted optical effects described above.

In various examples, each lenslet in the array of lenslets may be different from all other other lenslets in the array; however, this may result in a complex manufacturing process (e.g. as a consequence of the huge data file that must be written in a lithographic process to produce the array of lenslets).

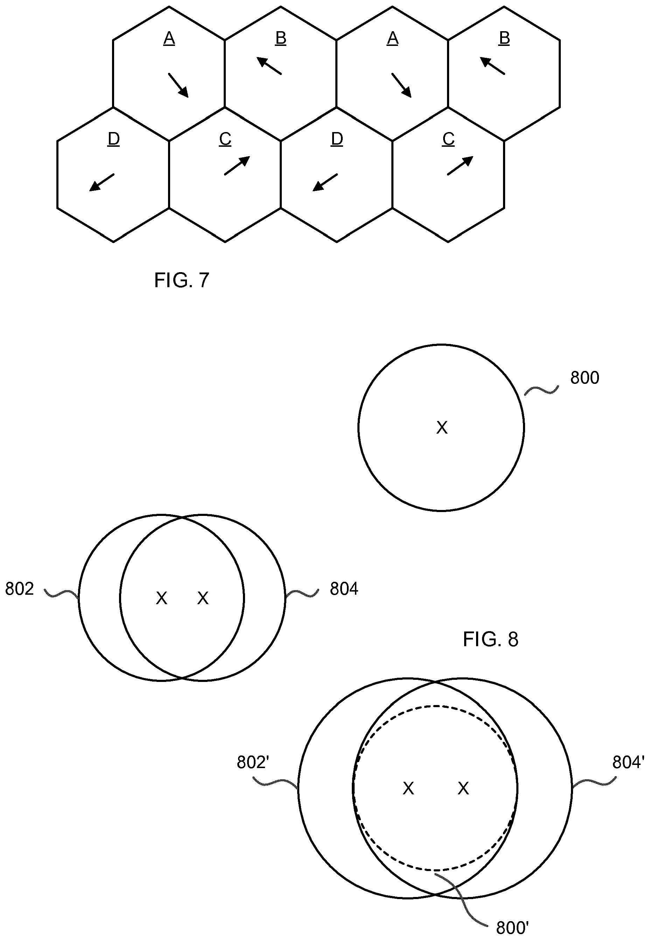

In other examples, however, the arrangement of lenslets within the array of lenslets that forms the diffuser screen may comprise a repeated group of lenslets wherein within each group at least one of the lenslets is different to the other lenslets in the group and an example is shown in figure 7. By forming the array from a repeating pattern of lenslets, the complexity of the manufacturing process is reduced (e.g. the size of data file is significantly reduced).

In the example shown in figure 7, the group of lenslets comprises four lenslets, denoted A-D, each of which is different (in terms of its optical properties and in particular its output cone) to the other lenslets in the group. In this example, each has a different offset of the centre of curvature (or axis) of the lenslet from the centre of the lenslet, as indicated by the arrow in figure 7. The lenslets within the group tessellate and the group of lenslets also tessellates to form the array of lenslets.

In the example shown in figure 7, the offsets are as shown in the table below, however in other examples the offsets may be different.

| Lenslet | x-axis offset | y-axis offset |
|---|---|---|
| A | positive | negative |
| B | negative | positive |
| C | positive | positive |
| D | negative | negative |

In this example, the magnitude of the offset from the centre of the lenslet (e.g. the length of the arrow) is the same for all lenslets, but in other examples, the magnitude of the offsets may differ in addition to, or instead of, the direction of the offsets.

It will be appreciated that whilst figure 7 shows a group comprising four lenslets that all have different optical characteristics that are tessellated to form the diffuser screen, in other examples the group may comprise a different number of lenslets and/or not all the lenslets in the group may have different optical characteristics from each other.

Whilst in the examples described above, the difference in optical characteristics is a result of different offsets in the position of the centre of curvature (or axis) from the centre of the lenslet, in other examples, the difference in optical characteristics may in addition, or instead, be a consequence of other physical differences between lenslets such as one or more of: different thicknesses of lenslets, different radii of curvature, etc. In various examples the group of lenslets may comprise one or more lenslets with a positive power (e.g. a convex lenslet) and one or more lenslets with a negative power (e.g. a negative lenslet). In many examples, the difference in optical characteristics results in a difference in the output cone of the lenslet.

In the improved diffuser screen described herein, each lenslet may have a diameter of approximately 20-25µm and there may be 4-5 lenslets per pixel. In other examples, larger or smaller lenslets may be provided (e.g. 5µm diameter lenslets).

Whilst the diffuser screen is described as being for use in a HUD, it may alternatively be used in a helmet-mounted display; however, this requires significantly smaller lenslets.

An effect of the variation in lenslets is the dithering of the far field pattern as described above. This means that the output cones of the lenslets do not overlap exactly and this may be described with reference to the schematic diagrams in figure 8. For an array of identical lenslets, the far field patterns overlap exactly and the normal far field of the final image may be represented by the circle 800 (although as described above, in actual implementations it may be hexagonal or another shape). As a result of variation between lenslets, the far field of neighbouring lenslets is shifted, for example as shown by the offset circles 802 and 804 (for purposes of illustration, the offsets are exaggerated and the far field patterns of only two lenslets from the array are shown). Consequently, in various examples, to fully illuminate the collimating optics with the output cone from each of the lenslets (and hence without reducing the exit pupil size 800'), the lenslets may be designed such that the cone of each lenslet is larger than the exit pupil size 800', for example the cone may be 802', 804' rather than 802, 804. This slightly reduces the efficiency of the HUD as the light falling outside the actual exit pupil 800' does not reach the viewer and is essentially clipped within the optics. As a result, there may be a trade-off between magnitude of offset in the output cones of the different lenslets and efficiency. In various examples, the offset in the output cones of different lenslets may be selected so that the null in the fringes from one set of identical lenslets (e.g. all lenslets A in figure 7) overlaps the peak in the fringes from another set of identical lenslets (e.g. all lenslets B in figure 7).

Whilst the diagrams show only a small number of lenslets (e.g. figure 6), it will be appreciated that a diffuser screen may comprise an array of thousands of lenslets.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term 'comprising' does not exclude the presence of other elements or steps.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality. In the claims, the term 'comprising' or "including" does not exclude the presence of other elements.

## Claims

1. A diffuser screen for a HUD, the diffuser screen comprising a tessellated array of lenslets and wherein the array comprises a plurality of individual lenslets in proximity with N nearest neighbours; wherein for a predetermined lenslet at least one of the N nearest neighbours has a different optical characteristic to the predetermined lenslet.

2. A diffuser screen of claim 1, wherein the different optical characteristic results in a different output cone of the lenslet.

3. The diffuser screen of claim 1 or 2, wherein the tessellated array of lenslets comprises a plurality of identical groups of lenslets tessellated over the array, each group of lenslets comprising a plurality of adjacent lenslets and within each group of lenslets, at least one of the lenslets has a different optical characteristic to another lenslet in the group.

4. The diffuser screen of claim 3, wherein each group comprises four lenslets and each lenslet in the group has a different optical characteristic to each other lenslet in the group.

5. The diffuser screen of any of the preceding claims, wherein each lenslet has an identical radius of curvature.

6. The diffuser screen of any of the preceding claims, wherein the different optical characteristic is an offset of a centre of curvature of the lenslet from the centre of the lenslet.

7. The diffuser screen of claim 6, wherein each lenslet has an offset of an identical magnitude and the different optical characteristic is a direction of the offset from the centre of the lenslet.

8. The diffuser screen of claim 1 or 2, wherein each lenslet in the array of lenslets has a different optical characteristic to each other lenslet in the array.

9. The diffuser screen of claim 1 or 2, wherein the predetermined lenslet is a positive lenslet and at least one of the N nearest neighbours is a negative lenslet.

10. The diffuser screen of any of claims 5-9, wherein each lenslet is an asymmetric lenslet.

11. The diffuser screen of any of the preceding claims, wherein each lenslet is hexagonal in shape.

12. The diffuser screen of any of the preceding claims, wherein an output cone of the diffuser screen is off-axis.

13. A HUD comprising the diffuser screen of any of the preceding claims.

14. A method of manufacturing a diffuser screen for a HUD, the method comprising:
forming a tesellated array of lenslets comprising a plurality of individual lenslets in proximity with N nearest neighbours; wherein for a predetermined lenslet at least one of the N nearest neighbours has a different optical characteristic to the predetermined lenslet.

15. The method according to claim 14, wherein forming a tesellated array of lenslets comprises:
patterning a substrate using lithography to define the tesellated array of lenslets comprising a plurality of individual lenslets in proximity with N nearest neighbours; wherein for a predetermined lenslet at least one of the N nearest neighbours has a different optical characteristic to the predetermined lenslet; and
etching the patterned substrate.
